# EUROPEAN PATENT APPLICATION

(11) **EP 4 641 392 A1**
(43) Date of publication of application: **29.10.2025**
(21) Application number: 24172525.8
(22) Date of filing: 25.04.2024
(51) Int. Cl.: G06F 11/34, G06F 11/36

(54) **A COMPUTER IMPLEMENTED METHOD FOR CYCLE TIME TESTING**

(71) Applicant: Siemens Aktiengesellschaft, 80333 München (DE)
(72) Inventor: Bäuml, Daniel, 92348 Berg bei Neumarkt in der Oberpfalz (DE); Gupta, Rohit, 81379 München (DE); Höfig, Kai, 83101 Rohrdorf (DE)
(74) Representative: Siemens Patent Attorneys

(57) **Abstract**

The invention relates to a computer implemented method for cycle time testing which is characterized in that a cycle time of a developed software code increment that is intended to be implemented on a first hardware, in particular a so called "Programable Logic Controller", PLC-program code increment, wherein said first hardware is a target hardware for which said developed software code increment is intended for, in particular said PLC, is tested at least for one time without said developed software code increment being implemented on any hardware, in particular said first hardware. It also relates to an arrangement for carrying out the method and a computer-program product.

## Description

The invention relates to a computer implemented method according to the preamble of claim 1, an arrangement for carrying out the computer implemented method according to the preamble of claim 11, as well as a computer-program product according to the preamble of claim 12.

It is well known in the art of software development, that the current process to develop software is performed usually in a team of developers, the software being built in an iterative approach where development occurs in, particularly small, steps involving an iterative approach where the team delivers in each iteration new software increments.

Each increment represents a small but functional unit of the software that is independently testable and deployable, delivering real value to users.

Software incrementation is often associated with agile development methods such as Scrum or Kanban, where development occurs in short iterations. Usually a version control system, like Git, facilitates the management and tracking of these increments, as changes can be organized into commits, and developers in said team can work on different features independently. For this purpose, new software increments are checked into Git.

It is also known that if software development is more hardware-oriented, especially in a PLC (Programmable Logic Controller) context, some aspects may change or be emphasized, e.g. it is important for software development to continuously adapt to hardware requirements. Since PLC systems are often closely tied to specific hardware, software increments may need to be adjusted and tested more frequently to ensure they interact correctly with the hardware.

One such requirement is the so-called cycle time. The cycle time is essential in hardware-oriented software development, particularly in the context of PLC (Programmable Logic Controller) programming, wherein the cycle time refers to the time it takes for the PLC to complete one full cycle of scanning, processing inputs, executing the program logic, and updating outputs. In industrial automation applications, where PLCs are commonly used, cycle time is a critical parameter because it directly affects the responsiveness and efficiency of the control system. Therefore, cycle time is a key consideration in hardware-oriented software development, especially for PLCs. Hence, the cycle time has to be tested.

For such testing it is known, that according to the above-described process of continuously integrating software increments, a so-called (Continuous Integration) Cl-pipeline is utilized. Cl pipeline refers to the automated process that integrates code changes into a shared repository, builds the software, runs tests, compiles it, and deploys it to the target environment. After the deployment, the cycle times must be tested manually on the hardware to check whether the timing requirements are met, i.e., if the cycle time is lower than the maximal accepted cycle time.

This is a manual step that is usually done once per increment. If the test fails, the software must be changed. To do so, the reason for the exceeded timeline must be identified in the code or a part of the code must be identified that can be improved in a way so that the timeline is met. That is also a manual task involving code reviews and discussions. Hence, these tests are time consuming and cost intensive.

According to a known solution for that problem, a worst-case cycle time, which is to be compared with the maximal accepted time, is generated automatically. For this purpose, proprietary tools are utilized that only work for very specific target hardware. Due to the limitation to proprietary hardware that enables the automation and due to the automation, itself, the solution is faster, but those tools involve very expensive hardware models.

The underlying problem of the invention is therefore to provide a solution that at least partially overcomes the disadvantages of the prior art, in particular, to provide a technical solution that realizes an efficient and cost-effective way to test cycle times for determined hardware, especially PLCs.

This problem is solved by the computer-implemented method according to the preamble of claim 1, based on the features of the preamble by its characteristic features, by the arrangement to carry out the computer-implemented method according to the preamble of claim 11 and by the computer program product according to the preamble of claim 12.

The computer implemented method for cycle time testing according to the invention is characterized in that a cycle time of a developed software code increment that is intended to be implemented on a first hardware, in particular a so called "Programable Logic Controller", PLC-program code increment, wherein said first hardware is a target hardware for which said developed software code increment is intended for, in particular said PLC, is tested at least for one time without said developed software code increment being implemented on any hardware, in particular said first hardware.

With the inventive approach time can be saved, because at least for some increments hardware testing on the first hardware is skipped for example because it was done at another point in time and/or another hardware, the cycle time of the present increment is performed with the next increment, because of a source that encloses relations of cycle times for certain code increments, in particular code increments having the same signature, so that a cycle time can be chosen and/or a prediction of a cycle time is performed based on the software code increment.

Furthermore, the invention relates to an arrangement for performing the computer implemented method. The arrangement has the advantage of having the means to carry out the method and hence helps to realize the advantages of the computer-implemented method according to the invention.

The invention also relates to a computer program product with a computer program having means of performing the computer implemented method described above when the computer program is executed on a programmatic device.

For example, a computer program product, such as a computer program, can be provided or delivered as a storage medium, such as a memory card, USB stick, CD-ROM, DVD, or in the form of a downloadable file from a server on a network. This can be done, for example, in a wireless communication network by transmitting a corresponding file with the computer program product or the computer program tool. In particular, a control device, such as an industrial control PC or a programmable logic controller or a programmable logic controller, or PLC for short, or a microprocessor for a smart card or the like can be considered as a program-controlled device.

Advantageous embodiments and further development of the invention are indicated by the dependent claims.

According to an advantageous and preferred embodiment of the computer implemented method according to the invention said cycle time testing is established by predicting a cycle time for said developed software code increment using a pretrained language model for at least one time.

With prediction of cycle times for said developed software code increment based on a pretrained language model, cycle time testing on a hardware test environment can be skipped as the predicted cycle time can be used instead. This reduces time consuming steps like implementation of the developed software code increment, measuring of the cycle time and the like. Furthermore, by using a pretrained language model a minimum accuracy of predicted cycle times is given, which is a good starting point. As such language model can be improved by further training of said pretrained model for the purpose according to the invention, the grade of accuracy can be drastically improved.

A for this purpose particularly suitable embodiment of the computer implemented method according to the invention, is given, if said pretrained language model is utilized to build a cycle time analysis model, wherein said pretrained language model is, particularly initially, trained one further time using at least one code fragment, preferably a plurality of different code fragments, on at least one second hardware, whereby said second hardware is at least functionally, equal to said first hardware for which said developed software code increment is intended for.

One advantage of this embodiment, among others, is that the further training of the pretrained language model is based on said second hardware. This means that the training is independent on the actual hardware. Hence, the training may take place in another place at another time. The training time preferably being at least partially in the past, i.e. before any actual software development for the first hardware takes place. With such approach the grade of prediction in connection with the development for the first hardware is at least partially improved at the time the software development starts for the first hardware.

Furthermore, this further training might take place for different hardware models having the same function but, in particular slightly different hardware structure. With that the prediction is more flexible concerning other hardware models/types, i.e. for the process according to the invention the structural exact corresponding or at least the most similar hardware can be chosen. Furthermore, differences between different hardware models could be used for further training of the model or for analyzing with respect to possible improvements.

According to a preferred embodiment of the computer implemented method according to the invention at least one code fragment, preferably a plurality of different code fragments, is built by generating software code fragments automatically, wherein said software code fragments are generated randomly in such a manner, that they do not have to provide a meaningful functionality. With this embodiment the further training can be based on a specific code by generating as much as possible fragments built using this code. Moreover, as the fragments are generated randomly even seldom or unusual combinations of fragments might be generated, so that further training gets the most out of this approach. Another advantage of this approach is that there is no need to have software program code examples beforehand as everything is generated from the scratch.

However, if such examples exist, it is advantageous to use them in an alternative or supplemental embodiment of the computer implemented method according to the invention, where at least one code fragment, preferably a plurality of different code fragments, is taken from a repository, whereby the repository is preferably built as a database with code fragments intended for the cycle time testing. With using code fragments from a database, one could use fragments that are known to be used, e.g., because they are part of said program examples. This might be advantageous as there is a high likelihood that these fragments are reused. Hence, with this approach alone the training might be good enough to reach a high grade of accuracy of the prediction and in combination with random code fragments this grade of accuracy will be improved more.

According to another embodiment of the computer implemented method according to the invention said further training may be enhanced by further steps. These steps include deploying one or more code fragments, preferably a collection of different code fragments, on a hardware test environment based on the second hardware and the cycle time of at least one software code fragment on the second hardware is measured. The pretrained language model is then trained using a sample that is constructed from the measured cycle time and the corresponding software code fragment. By applying these further steps appropriate training samples are built.

In yet another embodiment of the computer implemented method according to the invention, the cycle time testing involves several further steps. First, the cycle time analysis model is integrated into a process known as "Continuous Integration" or Cl-pipeline process. During each execution of the Cl pipeline process, the cycle time of a developed software increment is predicted using the cycle time analysis model. This prediction is made for each developed software code increment.

Next, the predicted cycle time is compared against a predetermined first requirement, specifically a maximum cycle time threshold. If the predicted cycle time meets this first requirement, at least a first signal is generated. On the other hand, if the predicted cycle time fails to meet the first requirement, at least a second signal is generated.

Depending on whether a first or second signal has been generated, development parameters are set accordingly. With this embodiment on the one hand a basis for guidance of developers is established as the signaling might be used to inform them of possible development steps, on the other hand based on the signaling further automated steps might be triggered.

For example, initial steps to carry out yet another advantageous embodiment of the computer implemented method according to the invention could be triggered in which the process of cycle time testing involves deploying the developed software code increment on a hardware test environment based on the first hardware. The cycle time of the code increment on the first hardware is then measured. The predicted cycle time is compared to the measured real cycle time on the first hardware. If the two times differ, i.e., a second requirement, such as a maximum difference threshold, is not met, the language model is retrained. To retrain the language model, a new sample consisting of the measured cycle time and the software code is used. Finally, the cycle time analysis model is updated and deployed in the Cl-pipeline process based on the previous steps.

With this embodiment a further improvement of the cycle time model is achieved, fewer hardware implementations to test the cycle time are needed and the number of cycle time predictions can be increased, as the precision of the prediction. Consequently, more time is saved.

In yet another embodiment of the computer implemented method according to the invention, the cycle time testing involves several steps. First, meaningful fractions of the actual software code are built. These fractions can include a single command, a method, and/or a loop. This is done when a new developed software code increment and/or code fraction is generated, either through development or random generation.

Next, the meaningful fractions of the actual software code are analyzed in a way that identifies the parts of the code that consume the most cycle time. This analysis helps in pinpointing the sections of the code that contribute significantly to the overall cycle time.

Once the code parts with the most cycle time are identified, they are marked in such a way that developers can easily identify them. This automatically carried out step allows developers to focus on optimizing or improving the identified code sections to reduce cycle time.

According to another embodiment of the computer implemented method according to the invention, the cycle time testing involves several further steps.

First, a signature is built for the code that has the highest cycle time. This signature serves as a unique identifier for the code segment.

Next, a check is performed on at least one database, such as code repositories, to search for code that has a similar signature to the high cycle time code. This helps in identifying other code fragments that may have similar performance issues.

Once the code fragments with the same signature are identified, they are analyzed to determine if any improvements can be made to their cycle time.

The analyzed code fragments are then visually presented to developers, providing them with a clear understanding of the identified code and its potential impact on cycle time.

Furthermore, the integration of the suggested code fragments is automated, and function tests are run to ensure that the changes do not introduce any new issues.

With this embodiment not only the cycle time prediction is improved but the process according to the invention is used to enable guided programming in such a manner that the software code increment may be optimized in terms of a reduced cycle time.

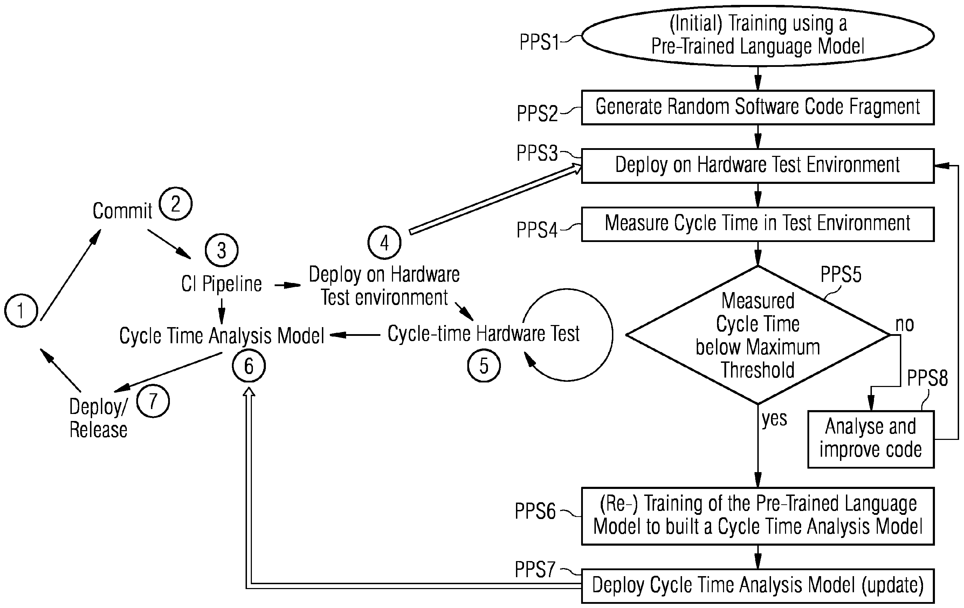

Further advantages and details of the invention are explained using one embodiment of the invention shown in the single figure. In doing so, the
- FIGURE: shows a schematical flow chart of the embodiment of the computer implemented method and functional arrangement according to the invention.

The embodiments and functions, some of which are presented in the FIGURE below and some of which are only explained, are a preferred embodiment and further development of the computer implemented method and arrangement for carrying out the method according to the invention.

In the embodiments, the described components of the embodiments represent individual features of the invention that are to be considered independently of each other, which also develop the invention independently of each other and are therefore also to be regarded as part of the invention individually or in a combination other than the one shown.

Furthermore, the described embodiments can also be supplemented by other features of the invention already described.

In the FIGURE, an embodiment of the computer implemented method according to the invention is schematically shown as a cycle diagram on the left-hand side of the drawing. It can be seen that the embodiment of the computer implemented method according to the invention is carried out by seven steps 1...7, which are carried out in an arrangement, involving different functional and structural entities utilized to process the steps 1 ...7 of the cycle diagram. These steps and/or preprocessing, like training an initial training of a language model, may partially be carried out in different stages and/or different points in time.

Such a preprocessing step according to the embodiment of the invention that usually will take place before continuous integration of software increments is carried out, is building a cycle time analysis model for prediction of cycle times per software increment. An embodiment according to the invention of this preprocessed establishment is also shown as flow-chart on the righthand side of the drawing.

First, according to the embodiment of the invention, a preferably pre-trained language model, such as the so-called "Bidirectional Encoder Representations from Transformers" (BERT) language model, is to be trained as a pre-processing step PPS1 for the purpose of building the cycle time analysis model. Therefore, according to the flowchart, the first pre-processing step PPS1 is shown as a state of the pre-processing process that represents respectively starts this training.

For the training of the pre-trained language model on various code fragments, the preprocessing continues with a second preprocessing step PPS2, a random software code fragment is generated.

These random software code fragment generations can be done automatically and/or repeatedly, whereby, according to another embodiment of the invention, the software code fragments are randomly generated in such a way that they do not provide any meaningful functionality, thereby making the generation less complex. In addition, such random generation - as well as repeated generation - can lead to a wider range of code fragments and code combinations being made available for training than, for example, the use of known, i.e., meaningful code fragments.

In yet another embodiment of the invention a set of the generated random software fragments may be combined with each other to build more complex random software fragments.

Hence, in a third preprocessing step PPS3 at least one generated random software code fragment is deployed on a hardware test environment, whereby the respective environment is based on an arbitrary hardware, wherein the arbitrary hardware corresponds to a respective target hardware for which the software increments are intended. With this a target hardware cycle time on different code fragments can be realized.

The respective realized cycle time is then measured in a fourth preprocessing step PPS4 and in a fifth preprocessing step PPS5 the measured cycle time trained back as a sample using the code fragment, respectively the combination of code samples, and the measured cycle time back to the pre-trained language model, thereby building the (initial) cycle time analysis model.

After repeating (not shown) these five steps for several code fragments and/or combination of code fragments the model is then capable to predict the cycle time for the given software code. Initially, this rough estimation, which can be achieved based on the model, can differ vastly from the actual cycle time.

According to yet another embodiment a more precise initial model might be built by applying some optional preprocessing steps, i.e., after measuring the respective cycle time, it could be checked in a seventh preprocessing step PPS7 if the measured cycle time is below a set threshold. The threshold being set as the maximum allowed threshold for the hardware executing one or more code fragments and/or a maximum threshold set for a code fragment/ cycle time sample pair.

If it is below the threshold set the preprocessing carries out the fifth preprocessing step PPS5 and if it is not below the threshold as another optional step an eighth preprocessing step PPS8 is carried out, wherein the code fragment and/or combination of code fragments is analyzed to optimization possibilities, i.e., to find the parts of the code fragment and/or combination of code fragments that is responsible in order to e.g., give guidance not to use such code and/or to find code alternatives realizing the same functionality, which can also be used for guidance and/or maybe automatically be substituted by a better code. For such purposes optimal code fragments/cycle time pairs might be noted according to another not shown optional step.

To find an optimal or at least more optimal alternative code fragment, a candidate for optimization might be chosen as a result of the eighth preprocessing step PPS8 and deployed on the environment, i.e., the preprocessing jumps to the third preprocessing step PPS3, whereby this is repeated till the cycle time is below the threshold and the model trained with an optimized sample of code and cycle time.

With more or less precise initial cycle time analysis model the shown embodiment of the computer implemented method of the invention, the post processing or main process - being the incremental software development of software for continuous integration - can be carried out.

This main process starts with a first step 1 in which in connection with a continuous integration software development process a new software increment was finalized. At this stage, as a second step 2, the software increment is committed to the functional entity or entities that are enabling the Cl pipeline that is utilized in a continuous integration software development process.

This is done among other things in order to check if the cycle time is met by the actual software increment. Usually, the software increment is then deployed on a hardware test environment but according to the embodiment this does not have to be done, i.e., at least this is reduced to a minimum. However, sometimes, i.e., at least when the result of the software development circle is ready to be released, this deployment has to be done. Hence, according to the embodiment shown in the drawing in a fourth step 4 the software increment is deployed on the hardware test environment.

Following this as a fifth step 5 the cycle time hardware test is performed on the target hardware and/or at least on a functionally corresponding hardware.

According to the embodiment during this hardware test parts of the test might be performed in a manner the preprocessing did the hardware test, i.e., the steps from the third preprocessing step PPS3 to the sixth preprocessing step PPS6 along with at least the seventh step PPS7 and optional the eighth step PPS8, might be run at least in one loop. This makes sure that the cycle time analysis model is retrained based on real cycle times and that the model updated in this way is deployed in the main process. This is indicated with the upper bold arrow.

If the actual software increment is not intended to be deployed on a hardware test environment, then the main process continues from the third step 3 directly with an estimation of the cycle time.

For this purpose, the cycle time analysis model, based for example on the initial training preprocessing embodiment of the invention described above, is integrated in the Cl pipeline - schematically indicated with the lower bold arrow - in such a manner that during each execution of the continuous integration pipeline a cycle time is then estimated in a sixth step 6 based on said cycle time (1,2,3,6).

This estimation is checked against the requirement, the upper bound of cycle time of the PLC, and if the requirement is fulfilled, the stage is marked as successful. The development then continues with a seventh step 7 until a new increment is ready, so that the circle of the main process continues with the first step 1.

If the cycle time estimation does not match the requirement, so that the estimated cycle time is higher than the requirement, the stage is marked as unsuccessful.

In yet another embodiment the estimated time and the, particularly later, measured real cycle time on the actual hardware are compared to each other. This happens during the fourth to sixth step 4...6 - and might partially happen as it has been described above according to the third to sixth preprocessing steps PPS4... PPS6 along with the seventh step PPS7 and optionally the eighth step PPS8. If those two times differ from each other (using a predefined threshold like for example the maximum threshold set for the target hardware), the language model is retrained using a new sample that consists of the measured cycle time and the software. By doing so, the cycle time analysis model improves over time, each time a new hardware test is executed.

Over time, the cycle time analysis tool will improve, and the prediction becomes more accurate. When it is accurate enough, there can be more and more development cycles without executing the cycle time measurement on the actual hardware 1,2,3,6,7.

The invention is however not limited to what has been drawn or discussed so far. For example, in another embodiment of the invention the analysis tool in the sixth step 6 is also capable of predicting the cycle time for a fraction of a code increment that is committed in the second step 2. So, each meaningful fraction of the actual software can be analyzed separately. A meaningful fraction can be a single command, a method or a loop. By doing so, the parts of the code that consume the most cycle time can be identified. This provides information about which part of the code is the most important part when the cycle time needs to improve.

In yet another embodiment of the invention improvements made after a cycle time requirement was not successful, can now be automatically documented by using the cycle times for a code increment and/or fractions of a said code increment together with the changes in the code.

According to another embodiment of the invention the analysis tool in step 6 crawls through existing code repositories and checks for similar code of the one that is causing the high cycle time. That can be done for example by looking for functions with the same signature. Those code fragments are then analyzed for an improved cycle time and are provided as suggestions to the developer.

Hence, in contrast to the state-of-the-art processes, during the change process of the code according to the invention 1 ...7, it is clear, if the changes have the required effect on the timeline. Also, changes of the code are documented, so that it is clear why a certain code change has been made.

According to another embodiment of the invention it is also possible that an automated integration of those code fragments is performed and/or running the function test stage automatically is a possible embodiment.

A further advantage of the invention is that those cycle time analysis models can be used to analyze different hardware, i.e., instead of having an individual cycle time analysis model that was trained on a single hardware variant, a cycle time analysis model might be trained for different hardware, so that when testing the cycle time by prediction according to the invention, it could be checked, if the software increment has different effects on for example different versions of a target hardware or the tool in step 6 could be applied on different target hardware without the need to buy and/or install another cycle time analysis model.

The invention offers at least a good, especially after some retraining, a precise prediction of the cycle time.

Independent of the grammatical term usage, individuals with male, female or other gender identities are included within the term.

## Claims

1. A computer implemented method for cycle time testing
**characterized in that** a cycle time of a developed software code increment that is intended to be implemented on a first hardware, in particular a so called "Programable Logic Controller", PLC-program code increment, wherein said first hardware is a target hardware for which said developed software code increment is intended for, in particular said PLC, is tested at least for one time without said developed software code increment being implemented on any hardware, in particular said first hardware.

2. The computer implemented method according to claim 1,
**characterized in that** said cycle time testing is established by predicting a cycle time for said developed software code increment using a pretrained language model for at least one time.

3. The computer implemented method according to claim 2,
**characterized in that** said pretrained language model is utilized to build a cycle time analysis model, wherein said pretrained language model is, particularly initially, trained one further time using at least one code fragment, preferably a plurality of different code fragments, on at least one second hardware, whereby said second hardware is at least functionally, equal to said first hardware for which said developed software code increment is intended.

4. The computer implemented method according to claim 3,
**characterized in that** at least one code fragment, preferably a plurality of different code fragments, is built by generating software code fragments automatically, wherein said software code fragments are generated randomly in such a manner, that they do not have to provide a meaningful functionality.

5. The computer implemented method according to claim 3,
**characterized in that** at least one code fragment, preferably a plurality of different code fragments, is taken from a repository, whereby the repository is preferably built as a database with code fragments intended for the cycle time testing.

6. The computer implemented method according to one of the two previous claims, **characterized in that** said further training comprises the following steps:
a) Deploying at least one of said code fragments, preferably said plurality of different code fragments, on a hardware test environment based on said second hardware.
b) Measuring the cycle time of at least one of said software code fragments on said second hardware.
c) Training said pretrained language model using at least a sample built from said measured cycle time and respective software code fragment.

7. The computer implemented method according to one of the claims 3 to 6, **characterized in that** said cycle time testing comprises at least the following steps:
a) Integrating said cycle time analysis model into a so called "Continuous Integration"-, Cl-pipeline process.
b) Predicting said cycle time of a developed software increment during each execution of said Cl pipeline process, for example for each of said developed software code increments, based on said cycle time analysis model.
c) Comparing said predicted cycle time against a predetermined first requirement, in particular, a first value set as a maximum cycle time threshold.
d) Generating at least a first signal, if said predicted cycle time fulfills said first requirement.
e) Generating at least a second signal if said predicted cycle time does not meet the first requirement.
f) Setting of development parameters depending on whether a first or second signal has been generated.

8. The computer implemented method according to the previous claim, **characterized in that** the cycle testing comprises the steps:
a) Deploying said developed software code increment on a hardware test environment based on said first hardware.
b) Measuring the cycle time of said developed code increment on said first hardware.
c) Comparing said predicted cycle time and the measured real cycle time on said first hardware.
d) Retraining the language model if the two times differ using a second requirement, for example a second value set as a maximum difference threshold.
e) Using a new sample consisting of the measured cycle time and the software code to retrain the language model.
f) Updating the cycle time analysis model and deploying the update in the Cl-pipeline process based on the previous steps a) to e).

9. The computer implemented method according to one of the previous claims, **characterized in that** the cycle testing comprises the steps:
a) Building meaningful fractions, for example a single command, a method and/or a loop, of the actual software code, for example said developed software code increment and/or said at least one randomly generated code fraction, when a new developed software code increment and/or code fraction was generated.
b) Analyzing said meaningful fractions of the actual software code in such a manner, that parts of the code that consume the most cycle time are identified.
c) Marking the identified code in such a manner that codes with most cycle time can be identified by a developer.

10. The computer implemented method according to the previous claim,
**characterized in that** the cycle testing comprises the steps:
a) Building a signature for said code with most cycle time.
b) Checking at least a database, in particular, code repositories for a code having at least a similar signature.
c) Identifying code fragments with the same signature as the high cycle time code.
d) Analyzing the identified code fragments for improved cycle time.
e) Visually presenting at least one identified code to developers based on the analyzed code fragments.
f) Automating the integration of the suggested code fragments and running function tests.

11. Arrangement for carrying out the computer implemented method according to one of the previous claims.

12. A computer program product comprising a computer program having a means of carrying out the computer implemented method according to one of claims 1 to 7, when the computer program is made to be executed on a program-controlled device.
